# EUROPÄISCHE PATENTSCHRIFT

(11) **EP 1 832 412 B1**
(45) Veröffentlichungstag und Bekanntmachung des Hinweises auf die Patenterteilung: **11.11.2009**
(21) Anmeldenummer: 07100785.0
(22) Anmeldetag: 19.01.2007
(51) Int. Cl.: B29D 30/48, B60C 15/04

(54) **Vorrichtung zur Herstellung eines Wulstverstärkungsverbundes eines Fahrzeugluftreifens**
Device for manufacturing a beading bracing system for a vehicle pneumatic tyre
Dispositif destiné à la fabrication d'une liaison de renforcement d'un bourrelet d'un pneu de véhicule

(30) Priorität: 10.03.2006 DE 102006011157
(43) Veröffentlichungstag der Anmeldung: 12.09.2007
(73) Patentinhaber: Continental Aktiengesellschaft, 30165 Hannover (DE)
(72) Erfinder: Ludwig, Jens, 30173 Hannover (DE); Komischke, Ralf, 31275 Lehrte (DE)

(56) Entgegenhaltungen:
- EP-A- 1 683 628
- EP-A2- 1 060 872
- EP-A2- 1 125 724
- JP-A- 63 214 434
- US-A- 3 881 526

## Beschreibung

Die Erfindung betrifft eine Vorrichtung und ein Verfahren zum Herstellen eines Wulstverstärkungsverbundes eines Fahrzeugluftreifens mit wenigstens einem spiralig gewickelten Wulstverstärkungsmaterial sowie ein Verfahren zur Herstellung eines Wulstverstärkungsverbundes eines Fahrzeugluftreifens mit wenigstens einem spiralig gewickelten Wulstventärkungsmaterial.

Der Einsatz eines derartigen Wulstverstärkungsverbundes im Fahrzeugluftreifen ist bekannt. So ist beispielsweise aus der EP1174289A2 bekannt einen Wulstverstärkungsverbund mit Wulstkern, Kernreiter und Wulstverstärkungslagen mit spiralig angeordneten Festigkeitsträgern in einen Fahrzeugluftreifen mit ein zubauen.

Aus der JP 11 105 155 ist eine Vorrichtung bekannt, bei der extrudiertes Kautschulanaterial zur Herstellung eines Apex auf den auf einer Scheibe aufgelegtem Wulstkern spiralig gewickelt wird. Die Scheibe ist um eine Drehachse drehbar gelagert und mit einer konzentrischen Stützfläche zur Abstützung eines aufgenommenen Wulstkernes ausgebildet. Der Extruder ist in seiner Position zur Drehachse verschiebbar ausgebildet. Aus der EP 1 683 628 A1 ist ebenfalls bekannt, einen Apex aus gewickeltem Kautschukband herzustellen.

Der Erfindung liegt nun die Aufgabe zugrunde, eine Herstellung eines Wulstverstärkungsverbundes eines Fahrzeugluftreifens mit wenigstens einem spiralig gewickelten Wulstverstärkungsmaterial mit einfachen Mitteln zuverlässig zu ermöglichen.

Die Aufgabe wird durch die Ausbildung einer Vorrichtung zum Herstellen eines Wulstverstärkungsverbundes eines Fahrzeugluftreifens mit wenigstens einem spiralig gewickelten Wulstveretärkungsmaterial gemäß den Merkmalen von Anspruch 1 mit einer um eine Drehachse drehbar gelagerten Aufnahmeeinrichtung zur konzentrischen Aufnahme eines ringförmig ausgebildeten - insbesondere einen Wulstkern aufweisenden - Trägermaterials, die mit einer konzentrischen Stützfläche zur Abstützung des Trägermaterials in eine Erstreckungsrichtung der Drehachse und mit einer in die Gegenrichtung der Drehachse offen ausgebildeten Seite der Stützfläche zur Bestückung durch Auflegen und/oder zur Entnahme des Trägermaterials ausgebildet ist, mit einer Antriebsvorrichtung zum - insbesondere gesteuerten - Verdrehen der Aufnahmeeinrichtung, mit einer in ihrer Zuführposition zur Stützfläche in radialer Richtung zur Drehachse veränderbaren Zufuhreinrichtung zum - insbesondere gesteuerten - kontinuierlichen Zuführen eines band- oder fadenförmigen Festigkeitsträgers zum Aufbau des Wulstverstärkers von der offen ausgebildeten Seite und mit einer Antriebsvorrichtung zur - insbesondere gesteuerten - Veränderung der Zuführposition der Zuführvorrichtung zumindest innerhalb des radialen Erstreckungebereichs der Aufnahmeeinrichtung während der Zufuhr in radialer Richtung zur Drehachse hin und/oder in radialer Richtung von der Drehachse weg, wobei die konzentrische Stützfläche zur Abstützung des Trägermaterials in eine Erstreckungsrichtung der Drehachse aus mehreren in Umfangsrichtung um die Drehachse verteilt angeordneten radial außerhalb der konzentrisch zur Drehachse ausgebildeten radial äußeren als radiale Stützfläche zur Zentrierung des Trägermaterials ausgebildeten Mantelfläche jeweils um eine tangential zur Umfangsrichtung ausgerichtete Schwenkachse schwenkbar ausgebildeten Stützsegmenten ausgebildet ist, gelöst.

Ebenso wird die Aufgabe durch ein Verfahren zur Herstellung eines Wulstverstärkungsverbundes eines Fahrzeugluftreifens mit wenigstens einem spiralig gewickelten Wulstverstärkungsmaterial gemäß den Merkmalen von Anspruch 8 gelöst, bei dem zunächst ein ringförmig ausgebildetes - insbesondere einen Wulstkern aufweisendes - Trägermaterial konzentrisch zur Drehachse einer drehbar gelagerten Aufnahmeeinrichtung auf einer in der Aufnahmeeinrichtung zur konzentrischen Aufnahme des ringförmig ausgebildeten Trägermaterials ausgebildete Stützfläche abgelegt wird, bei dem danach ein band- oder fadenförmiges Verstärkungsmaterial von der in Richtung der Drehachse zur Stützfläche gegenüberliegenden Seite des abgelegten Trägermaterials von einer Zufuhreinrichtung auf das Trägermaterial aufgelegt wird, wobei zum Auflegen die Aufnahmeeinrichtung mit dem Trägermaterial um die Drehachse der Aufnahmeeinrichtung - insbesondere gesteuert - verdreht und gleichzeitig die Zufuhreinrichtung in ihrer Position radial zur Drehachse - insbesondere gesteuert - verändert wird, so dass das band- oder fadenförmige Verstärkungsmaterial auf diese Weise spiralig um die Drehachse auf das Trägermaterial aufgebaut wird, und bei dem insbesondere der auf diese Weise aus Trägermaterial und spiralig aufgebautem band- oder fadenförmigem Verstärkungsmaterial aufgebaute Wulstverstärkungsverbund danach der konzentrischen Stützfläche der Aumahmeeinrichtung entnommen und zur weiteren Reifenherstellung bereitgestellt wird.

In einfacher Weise kann das jeweils für einen konzipierten Reifen vorgefertigte Trägermaterial mit einem individuell beabsichtigten spiraligen Wickelbild eine Wulstverstärkungsmaterials belegt und der individuell beabsichtigte Wulstverstärkungsverbund hergestellt werden. Über die Drehgeschwindigkeit, die Geschwindigkeit der der Veränderung der Zufuhreinrichtung in ihrer Zuführposition und über den Erstreckungsweg der Bewegung der Zuführposition kann das individuell gewünschte Spiralbild eingestellt werden. Besonders vorteilhaft ist die gesteuerte Einstellung mit der sehr einfach individuelle Veränderungen des Wickelbildes nach der Herstellung eines ersten Wulstverstärkungsverbundes möglich werden, so dass im Anschluss schnell und einfach ein zweiter Wulstverstärkungsverbund mit anderen individuellen Erfordernissen hergestellt werden kann. Darüber hinaus ist auch eine gezielte gesteuerte Veränderung während der Herstellung möglich, um beispielsweise gezielt unterschiedliche Wicklungsdichten der spiraligen Wicklung eines Wulstverstärkungsverbundes zu erzielen.

Bevorzugt ist die Ausbildung einer Vorrichtung gemäß den Merkmalen von Anspruch 2, wobei die Aufnahmeeinrichtung mit einer konzentrisch zur Drehachse ausgebildeten Mantelfläche als radiale Stützfläche zur Zentrierung des Trägermaterials ausgebildet ist. Hierdurch kann die zuverlässige genaue Ausbildung des Wulstverstärkungsverbundes und des Fahrzeugluftreifens gesichert werden. Die raumsparende Ausbildung ermöglicht die einfache Bereitstellung und Integration beispielsweise von Greifern und somit eine automatische Entnahme.

Bevorzugt ist die Ausbildung einer Vorrichtung gemäß den Merkmalen von Anspruch 3, wobei die Aufnahmeeinrichtung mit einer konzentrisch zur Drehachse ausgebildeten radial äußeren Mantelfläche als radiale Stützfläche zur Zentrierung des Trägermaterials ausgebildet ist.

Bevorzugt ist die Ausbildung einer Vorrichtung gemäß den Merkmalen von Anspruch 4, wobei die als radiale Stützfläche zur Zentrierung des Trägermaterials ausgebildete radial äußere Mantelfläche mit einer Profilierung zur Erzielung eines Formschlusses mit dem Trägermaterial ausgebildet ist.

Bevorzugt ist die Ausbildung einer Vorrichtung gemäß den Merkmalen von Anspruch 5, wobei die als radiale Stützfläche zur Zentrierung des Trägermaterials ausgebildete radial äußere Mantelfläche in einem in Richtung der Drehachse ausgebildeten Abstand a von der Stützfläche, die der Erstreckung des Trägermaterials in seiner Sitzposition auf der Mantelfläche entspricht, mit einer Schulter zur Erzielung eines Formschlusses mit dem Trägermaterial ausgebildet ist.

Bevorzugt ist die Ausbildung einer Vorrichtung gemäß den Merkmalen von Anspruch 6 mit Schwenkmitteln zum - insbesondere gesteuerten - Verschwenken der Stützsegmente. Die individuelle Herstellung von Wulstverstärkungsverbünden mit unterschiedlichen Anforderungen im Fahrzeugluftreifen wird hierdurch erleichtert. Darüber hinaus wird hierdurch eine automatische Annahme erleichtert.

Bevorzugt ist die Ausbildung einer Vorrichtung gemäß den Merkmalen von Anspruch 7, wobei die Stützsegmente sich von der Schwenkachse mit einem als Stützfläche ausgebildeten Hebelarm radial nach außen erstrecken, In einfacher Weise ermöglicht die hierdurch bedingte große Verstellbereich des Schwenkwinkels eine Minimierung der erforderlichen Werkzeuge.

Bevorzugt ist das Verfahren gemäß den Merkmalen von Anspruch 9, bei dem die Stützfläche vor Zuführung des Verstärkungsmaterials in ihrer Stützposition zur Anpassung an die Kontur des Trägermaterials verstellt wird. Die individuelle Herstellung von Wulstverstärkungsverbünden mit unterschiedlichen Anforderungen im Fahrzeugluftreifen wird hierdurch erleichtert.

Bevorzugt ist das Verfahren gemäß den Merkmalen von Anspruch 10, bei dem die Stützfläche nach Ablegen des Trägermaterials in seine Spulposition -und insbesondere nach Fixierung in der Spulposition - verstellt wird. Dies ermöglicht eine gezielte individuelle Einstellung der Kontur des Trägermaterials und ein konturnahes Spulen.

Die Erfindung wird im Folgenden an Hand des in den Figuren 1 bis 3 schematisch dargestellten Ausführungsbeispiels näher erläutert. Dabei zeigen
- Fig. 1:: eine Vorrichtung zum Herstellen eines Wulstverstärkungsverbundes eines Fahrzeugluftreifens mit Spulteller in einer Schnittdarstellung durch die Drehachse des Spultellers,
- Fig. 2:: Vorrichtung von Fig. 1 in Draufsicht gemäß Ansicht II-II von Fig. 1 und
- Fig. 3:: Vorrichtung von Fig. 1 in Seitenansicht gemäß Ansicht III- III von Fig. 1.

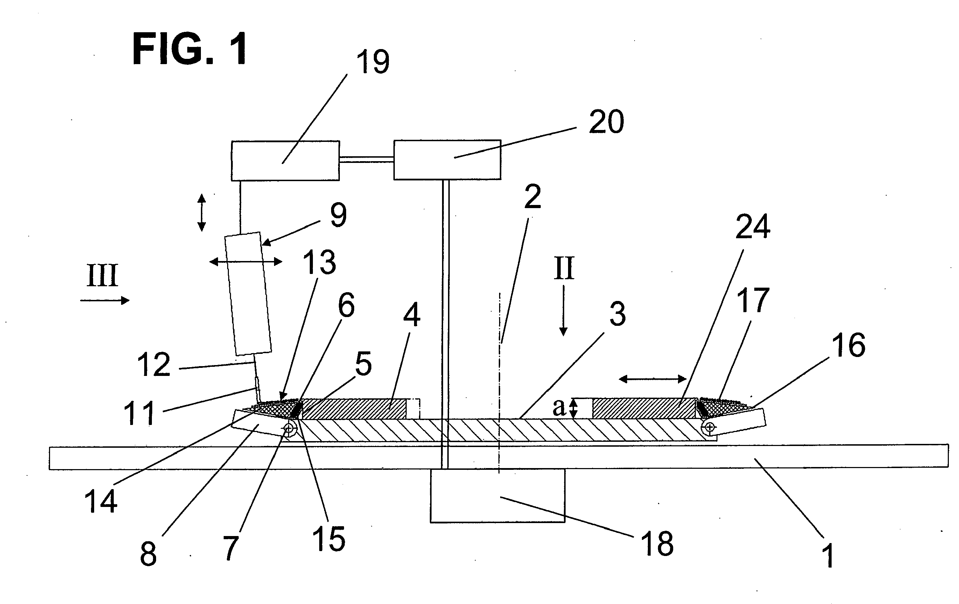

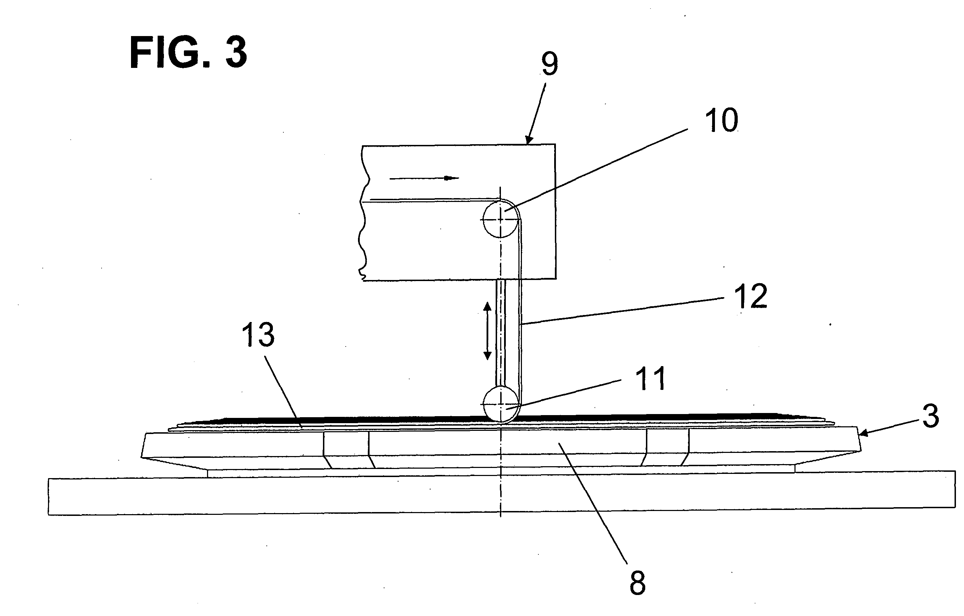

Figuren 1 bis 3 zeigen in schematischer Darstellung eine Vorrichtung zum Herstellen eines Wulstverstärkungsverbundes eines Fahrzeugluftreifens mit einem in einem Gestell 1 um eine beispielsweise vertikale Drehachse 2 drehbar gelagerten Spulteller 3. Auf der eben ausgebildeten Oberseite des Spultellers ist ein aus n über den Umfang des Spultellers verteilt angeordneten gleich ausgebildeten Kreissegmentringabschnitten 24 konzentrisch zur Drehachse 2 gebildeter Zentrierring 4 ausgebildet. Für n gilt: n > 2, beispielsweise wie in den Figuren dargestellt n = 5. Die Kreissegmentabschnitte 24 sind an der in Bezug auf die Drehachse 2 äußeren zylinderförmigen Mantelfläche als Sitzfläche 5 ausgebildet. Im Abstand a von der eben ausgebildeten Oberseite des Spultellers 3 ist die Sitzfläche 5 mit einer Umfangsrippe 6 ausgebildet. In Bezug auf die Drehachse 2 radial außerhalb der Sitzfläche 5 sind im Spulteller 3 über den Umfang des Spultellers hinweg n klappenförmige Stützhebel 8 jeweils um eine tangential zu einer gemeinsamen Kreislinie um die Drehachse 2 ausgerichtete Schwenkachse 7 schwenkbar gelagert ausgebildet. Jeder der Schwenkhebel 8 steht mit einem - der Einfachheit halber nicht dargestellten - Schwenkverstollmechenismus - beispielsweise einem Stellzylinder - bekannter Art in Verbindung. Der nicht dargestellte Stellmechanismus steht in bekannter nicht dargestellter Weise mit einer Steuereinheit 20 - beispielsweise einem Steuercomputer - in Steuerverbindung.

Der Spulteller 3 steht zur Verdrehung des Spultellers 3 um die Drehachse 2 in Antriebsverbindung mit einem Antrieb 18 bekannter Art. Der Antrieb 18 steht in bekannter Weise mit der Steuereinheit 20 in Steuerverbindung.

Oberhalb des Zentrierrings 4 ist ein Spulkopf 9 bekannter Art ausgebildet, in dem ein band- oder fadenförmiger kontinuierlich ausgebildeter Festigkeitsträger 12 über eine erste im Spulkopf drehbar gelagerte Umlenkrolle 10 und eine drehbar gelagerten Andrückrolle 11 tangential zu einem Kreis um die Drehachse 2 geführt wird. Der Spulkopf 9 ist mit samt der Andrückrolle 11 über nicht dargestellte Stellmittel bekannter Art von der Steuereinheit 20 gesteuert in seiner Höhenposition zum Spulteller einstellbar und über nicht dargestellte Stellmittel bekannter Art von der Steuereinheit 20 in seiner radialen Position zur Drehachse 2 gesteuert veränderbar - beispielsweise verschiebbar.

Zur Herstellung eines Wulstverstärkungsverbundes wird in bekannter - nicht dargestellter -Weise ein vorgefertigt profilierter Kernreiter 14 auf einen vorgefertigten Wulstkern 15 montiert. Das aus Kernreiter 14 und Wulstkern 15 vormontierte Modul wird parallel zur Drehachse 2 auf die Sitzfläche 5 des Zentrierrings 4 aufgeschoben. Der Zentrierring 4 ist dabei so bemessen, dass der Wulstkern 15 über die Umfangsrippe 6 geschoben werden kann und diese dennoch ein unbeabsichtigtes Lösen des Wulstkerns 5 vom Spulteller 3 weg längs der Drehachse 2 verhindert. Die Stützhebel 8 werden über die nicht dargestellten Mittel von der Steuereinheit 20 gesteuert soweit um die jeweiligen Schwenkachsen 7 verschwenkt, dass die zu dem aus Wulstkern 15 und Kernreiter 14 gebildeten Modul gerichteten als Stützflächen wirkenden Oberseiten der Stützhebel 8 in sicherem stützendem Berührkontakt zu dem aus Kern und Kernreiter gebildeten Modul liegen. In dieser Position werden die Stützhebel gehalten.

Der Abstand a ist dabei so bemessen, dass sich die Umfangsrippe 6 im montierten Zustand des Wulstkerns 15 auf der Sitzfläche 5 des Zentrierrings 4 im Berührkontakt zum Wulstkern 15 befindet.

In einer Ausführung sind die Kreissegmente 24 des Zentrierrings 4 radial zur Drehachse 2 gesteuert über einen Stellantrieb bekannter Art in ihrer Position verstellbar. Die Kreissegmente sind hierzu beispielsweise im Spulteller verschiebbar gelagert. Die Verstellung erfolgt dabei über die Steuereinheit 20 und den nicht dargestellten Stellantrieb.

Auf diese Weise kann das aus Wulstkern 15 und Kernreiter 14 gebildete Modul über die Umfangsrippe 6 nach radial innen zusammen geschobenen Kreissegmente 24 hinweg aufgeschoben werden. Danach werden die Kreissegmente 24 des Zentrierrings 4 gleichmäßig radial nach außen in ihre Zentrierposition bewegt und das Modul zentriert.. Die Stützhebel 8 werden über die nicht dargestellten Mittel von der Steuereinheit 20 gesteuert soweit um die jeweiligen Schwenkachsen 7 verschwenkt, dass die zu dem aus Wulstkern 15 und Kernreiter 14 gebildeten Modul gerichteten als Stützflächen wirkenden Oberseiten der Stützhebel 8 in sicherem stützendem Berührkontakt zu dem aus Kern und Kernreiter gebildeten Modul liegen. In dieser Position werden die Stützhebel gehalten. In diesem Fall kann die Umfangsrippe 6 größer dimensioniert werden, so dass ein sicherer Formschluss des Moduls zwischen der als Begrenzungsrippe wirkenden Umfangsrippe 6 und dem Stützhebel 8 gewährleistet werden kann.

Danach wird der Spulkopf 9 in die radial innere Position bewegt, von der aus der Festigkeitsträger 12 zum Aufbau der Wulstverstärkungslage 17 aufgebaut werden soll. Der Spulkopf 9 wird dann so weit abgesenkt, dass die Andrückrolle 11 mit dem um sie geführten Festigkeitsträger 12 auf dem aus Wulstkern 15 und Kernreiter 14 gebildeten Modul aufliegt. Danach wird der Spulteller 3 von der Steuereinheit 20 und der Antriebseinheit 18 in die gewünschte Drehrichtung mit der vorbestimmten Drehgeschwindigkeit rotierend angetrieben. Dabei wird der Spulkopf 9 mit seiner Auflegerolle 11 entsprechend der gewünschten vorbestimmten Spulungsdichte in seiner Geschwindigkeit von der Steuereinheit 20 gesteuert von der Drehachse 2 radial nach außen bewegt. Über die Drehgeschwindigkeit des Spultellers 3 sowie die Geschwindigkeit der Verschiebebewegung des Spulkopfs 9 in radialer Richtung von der Drehachse 2 weg wird die während des Wickelns die gewünschte Wicklungsdichte der spiraligen Wicklung des das Wulstverstärkungsmaterials 17 bildenden Festigkeitsträgers 12 erzielt.

Bei Erreichen der radial äußeren Endposition der Wulstverstärkungslage 17 wird der kontinuierlich über den Spulkopf 9 zugeführte Festigkeitsträger 12 in bekannter nicht näher dargestellter Weise abgeschnitten und die Drehbewegung des Spultellers 3 und die Verschiebebewegung des Spulkopfes 9 gesteuert beendet. Der Spulkopf 9 wird gesteuert angehoben. Danach wird der aus Wulstkern 15, Kernreiter 14 und Wulstverstärkungslage 17 gebildete Wulstverstärkungsverbund 13 vom Spulteller 3 parallel zur Drehachse 2 über die Umfangsrippe 6 angehoben und dem weiteren Verarbeitungsprozess zur Herstellung des Reifens zugeführt.

Soweit die Kreissegmente 24 des Zentrierrings 4 bewegbar ausgebildet sind, werden diese vor Entnahme des Wulstverstärkungsverbundes 13 von der Sitzfläche 5 des Zentrierrings dadurch gelöst, dass die Kreissegmente 24 gesteuert radial nach innen zur Drehachse 2 hin bewegt werden.

In anderer, nicht dargestellter Ausführung wird anstelle des gesamten Spulkopfes 9 lediglich die Andrückrolle 11 abgesenkt bzw. angehoben.

Anstelle der oben beschriebenen Wicklung von radial innen nach radial außen wird in anderer Ausführung in analoger Weise der Festigkeitsträger 12 auf dem aus Wulstkern 15 und Kernreiter 14 gebildeten Modul aufgewickelt aufgelegt.

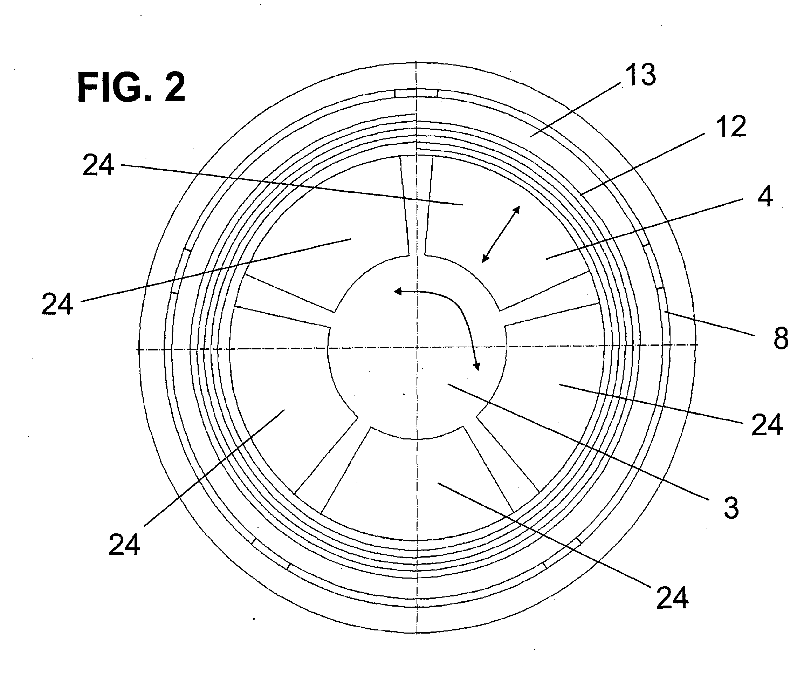

Wie in Fig. 2 dargestellt ist, wird in einer anderen Ausführung, ein aus Wulstkern 15, Kernreiter 14 und eine um Wulstkern 15 und Kernreiter 14 umgeschlagene Verstärkungslage 16, die beispielsweise aus textilen Festigkeitsträgern bekannter Art ausgebildet ist, gebildetes Modul in oben beschriebener Weise auf den Spulteller aufgelegt und mit dem Festigkeitsträger 12 zur Herstellung einer Wulstverstärkungslage 17 bespult.

Durch Wahl der Geschwindigkeit des Spulkopfes 9 und/oder der Drehgeschwindigkeit 2 kann je nach Bedarf in unterschiedlichen radialen Abschnitten der Spulung eine unterschiedliche Spulungsdichte eingestellt werden. So kann beispielsweise im radial inneren Bereich des Wulstverstärkungsverbundes 13 der Festigkeitsträger 17 von radial innen nach radial außen mit sehr geringen Abständen zwischen den gespulten Windungen und im radial äußeren Bereich mit deutlich größeren radialen Abständen aufgewickelt werden. Ebenso ist es auch möglich, bei Erfordernis im radial inneren Bereich einen größeren Abstand als im radial äußeren Bereich einzustellen.

In einer nicht dargestellten Ausführung wird auf eine erste Wulstverstärkungslage 17 eine zweite Wulstverstärkungslage 17 aufgewickelt. Diese kann in ihrer radialen Position gegenüber der ersten versetzt und/oder mit unterschiedlich radialem Erstreckungsbereich ausgebildet sein.

In einer anderen Ausführung wird das von der einen Seite mit einem Wulstverstärkungsmaterial 17 spiralig bespulte Modul vom Spulteller entnommen, mit seiner bespulten Seite nach unten wieder auf den Spulteller aufgespannt und von der zweiten Seite ebenfalls mit einem Wulstverstärkungsmaterial 17 spiralig bespult.

Durch Wahl der Drehrichtung des Spultellers um die Drehachse 2 kann jeweils die Wicklungsrichtung des Festigkeitsträgers 12 eingestellt werden. Hierdurch ist es möglich, zwei Wulstverstärkungslagen 17 sowohl mit gleicher Wicklungsrichtung als auch mit unterschiedlicher Wicklungsrichtung aufzulegen.

Der Festigkeitsträger 12 ist beispielsweise ein Stahlcord.
Der Festigkeitsträger 12 ist in einem anderen Ausführungsbeispiel ein Aramidcord oder ein anderer geeigneter textiler Festigkeitsträger.

In einer Ausführung ist der Festigkeitsträger 12 in bekannter Weise gummiert.

### Bezugszeichenliste

### (Teil der Beschreibung)

- 1: Gestell
- 2: Drehachse
- 3: Spulteller
- 4: Zentrierring
- 5: Sitzfläche
- 6: Begrenzungsrippe
- 7: Schwenkachse
- 8: Stützhebel
- 9: Spulkopf
- 10: Umlenkrolle
- 11: Andrückrolle
- 12: Festigkeitsträger
- 13: Wulstverstärkungsverbund
- 14: Kernreiter
- 15: Wulstkern
- 16: Verstärkungslage
- 17: Wulstverstärkungslage
- 18: Antrieb
- 19: Antrieb
- 20: Steuereinheit
- 24: Kreissegment

## Patentansprüche

1. Vorrichtung zum Herstellen eines Wulstverstärkungsverbundes (13) eines Fahrzeugluftreifens mit wenigstens einem spiralig gewickelten Wulstverstärkungsmaterial (17),
mit einer um eine Drehachse (2) drehbar gelagerten Aufnahmeeinrichtung (3) zur konzentrischen Aufnahme eines ringförmig ausgebildeten - insbesondere einen Wulstkern aufweisenden - Trägermaterials (15), die mit einer konzentrischen Stützfläche (8) zur Abstützung des Trägermaterials (15) in eine Erstreckungsrichtung der Drehachse (2) und mit einer in die Gegenrichtung der Drehachse (2) offen ausgebildeten Seite der Stützfläche (8) zur Bestückung durch Auflegen und/oder zur Entnahme des Trägermaterials (15) ausgebildet ist,
mit einer Antriebsvorrichtung (18) zum - insbesondere gesteuerten - Verdrehen der Aufnahmeeinrichtung (3),
mit einer in ihrer Zuführposition zur Stützfläche (8) in radialer Richtung zur Drehachse (2) veränderbaren Zufuhreinrichtung (9) zum - insbesondere gesteuerten - kontinuierlichen Zuführen eines band- oder fadenförmigen Festigkeitsträgers (12) zum Aufbau des Wulstverstärkers (17) von der offen ausgebildeten Seite und mit einer Antriebsvorrichtung (19) zur - insbesondere gesteuerten - Veränderung der Zuführposition der Zuführvorrichtung (9) zumindest innerhalb des radialen Erstreckungsbereichs der Aufnahmeeinrichtung (3) während der Zufuhr in radialer Richtung zur Drehachse (2) hin und/oder in radialer Richtung von der Drehachse weg,
wobei die konzentrische Stützfläche (8) zur Abstützung des Trägermaterials in eine Erstreckungsrichtung der Drehachse (2) aus mehreren in Umfangsrichtung um die Drehachse (2) verteilt angeordneten radial außerhalb der konzentrisch zur Drehachse ausgebildeten radial äußeren als radiale Stützfläche (5) zur Zentrierung des Trägermaterials (15) ausgebildeten Mantelfläche jeweils um eine tangential zur Uinfangsrichtung ausgerichtete Schwenkachse schwenkbar ausgebildeten Stützsegmenten (8) ausgebildet ist

2. Vorrichtung gemäß den Merkmalen von Anspruch 1,
wobei die Aufnahmeeinrichtung (3) mit einer konzentrisch zur Drehachse (2) ausgebildeten Mantelfläche als radiale Stützfläche (5) zur Zentrierung des Trägermaterials (15) ausgebildet ist.

3. Vorrichtung gemäß den Merkmalen von Anspruch 2,
wobei die Aufnahmeeinrichtung (3) mit einer konzentrisch zur Drehachse (2) ausgebildeten radial äußeren Mantelfläche als radiale Stützfläche (5) zur Zentrierung des Trägermaterials (15) ausgebildet ist.

4. Vorrichtung gemäß den Merkmalen von Anspruch 3,
wobei die als radiale Stützfläche (5) zur Zentrierung des Trägermaterials (15) ausgebildete radial äußere Mantelfläche mit einer Profilierung zur Erzielung eines Formschlusses mit dem Trägermaterial (15) ausgebildet ist.

5. Vorrichtung gemäß den Merkmalen von Anspruch 4,
wobei die als radiale Stützfläche (5) zur Zentrierung des Trägermaterials (15) ausgebildete radial äußere Mantelfläche in einem in Richtung der Drehachse (2) ausgebildeten Abstand a von der Stützfläche (8), die der Erstreckung des Trägermaterials (15) in seiner Sitzposition auf der Mantelfläche entspricht, mit einer Schulter zur Erzielung eines Formschlusses mit dem Trägermaterial (15) ausgebildet ist.

6. Vorrichtung gemäß den Merkmalen von Anspruch 1,
mit Schwenkmitteln zum - insbesondere gesteuerten - Verschwenken der Stützsegment (8).

7. Vorrichtung gemäß den Merkmalen von Anspruch 6,
wobei die Stützsegmente (8) sich von der Schwenkachse mit einem als Stützfläche (8) ausgebildeten Hebelarm (8) radial nach außen erstrecken.

8. Verfahren zur Herstellung eines Wulstverstärkungsverbundes (13) eines Fahrzeugluftreifens mit wenigstens einem spiralig gewickelten Wulstverstärkungsmaterial (17),
bei dem zunächst ein ringförmig ausgebildetes - insbesondere einen Wulstkern aufweisendes - Trägermaterial (15) konzentrisch zur Drehachse (2) einer drehbar gelagerten Aufnahmeeinrichtung (3) auf einer in der Aufnahmeeinrichtung zur konzentrischen Aufnahme des ringförming ausgebildeten Trägermaterials (15) ausgebildete Stützfläche (8) abgelegt wird,
bei dem danach ein band- oder fadenförmiges Verstärkungsmaterial (12) von der in Richtung der Drehachse (2) zur Stützfläche (8) gegenüberliegenden Seite des abgelegten Trägermaterials (15) von einer Zufuhreinrichtung (9) auf das Trägermaterial (15) aufgelegt wird, wobei zum Auflegen die Aufnahmeeinrichtung (3) mit dem Trägermaterial (15) um die Drehachse (2) der Aufnahmeeinrichtung (3) - insbesondere gesteuert - verdreht und gleichzeitig die Zufuhreinrichtung (9) in ihrer Position radial zur Drehachse (2) - insbesondere gesteuert - verändert wird, so dass das band- oder fadenförmige Verstärkungsmaterial (12) auf diese Weise spiralig um die Drehachse (2) auf das Trägermaterial (15) aufgebaut wird, und
bei dem insbesondere der auf diese Weise aus Trägermaterial (15) und spiralig aufgebautem band- oder fadenförmigem Verstärkungsmaterial (17) aufgebaute Wulstverstärkungsverbund (13) danach der konzentrischen Stützfläche (8) der Aufnahmeeinrichtung (3) entnommen und zur weiteren Reifenherstellung bereitgestellt wird.

9. Verfahren zur Herstellung eines Wulstverstärkungsverbundes (13) eines Fahrzeugluftreifens mit wenigstens einem spiralig gewickeltem Wulstverstärkungsmaterial (17) gemäß den Merkmalen von Anspruch 8,
bei dem die Stützfläche (8) vor Zuführung des Verstärkungsmaterials (17) in ihrer Stützposition zur Anpassung an die Kontur des Trägermaterials (15) verstellt wird.

10. Verfahren zur Herstellung eines Wulstverstärkungsverbundes (13) eines Fahrzeugluftreifens mit wenigstens einem spiralig gewickeltem Wulstverstärkungsmaterial (17) gemäß den Merkmalen von Anspruch 8,
bei dem die Stützfläche (8) nach Ablegen des Trägermaterials (15) in seine Spulposition -und insbesondere nach Fixierung in der Spulposition - verstellt wird.

## Claims

1. Device for manufacturing a bead reinforcing assembly (13) of a pneumatic vehicle tyre with at least one spirally wound bead reinforcing material (17),
with a receiving device (3), mounted rotatably about an axis of rotation (2), for concentrically receiving a carrier material (15), which is formed as a ring - in particular having a bead core - and is formed with a concentric supporting surface (8) for supporting the carrier material (15) in a direction in which the axis of rotation (2) extends and with a side of the supporting surface (8) that is of an open form in the direction away from the axis of rotation (2) for loading by placement and/or for removing the carrier material (15),
with a drive device (18) for turning the receiving device (3) - in particular in a controlled manner, with a feed device (9), which can be changed in its feeding position in relation to the supporting surface (8) in the radial direction with respect to the axis of rotation (2), for continuously feeding - in particular in a controlled manner - a reinforcing element (12) in strip or filament form for building up the bead reinforcer (17) from the side of an open form and
with a drive device (19) for changing - in particular in a controlled manner - the feeding position of the feed device (9) during the feeding, at least within the range of radial extent of the receiving device (3), in the radial direction towards the axis of rotation (2) or in the radial direction away from the axis of rotation,
the concentric supporting surface (8) for supporting the carrier material in a direction in which the axis of rotation (2) extends being formed by a number of supporting segments (8), which are arranged distributed in the circumferential direction around the axis of rotation (2), are formed radially outside the radially outer lateral surface that is formed concentrically in relation to the axis of rotation and are formed as a radial supporting surface (5) for the centring of the carrier material (15), in each case such that they can pivot about a pivot axis aligned tangentially in relation to the circumferential direction.

2. Device according to the features of Claim 1, the receiving device (3) being formed with a lateral surface formed concentrically in relation to the axis of rotation (2) as a radial supporting surface (5) for the centring of the carrier material (15).

3. Device according to the features of Claim 2, the receiving device (3) being formed with a radially outer lateral surface formed concentrically in relation to the axis of rotation (2) as a radial supporting surface (5) for the centring of the carrier material (15).

4. Device according to the features of Claim 3, the radially outer lateral surface formed as a radial supporting surface (5) for the centring of the carrier material (15) being formed with a profiling to achieve a form fit with the carrier material (15).

5. Device according to the features of Claim 4, the radially outer lateral surface formed as a radial supporting surface (5) for the centring of the carrier material (15) being formed at a distance a from the supporting surface (8) in the direction of the axis of rotation (2) that corresponds to the extent of the carrier material (15) in its position seated on the lateral surface, with a shoulder for achieving a form fit with the carrier material (15).

6. Device according to the features of Claim 1, with pivoting means for pivoting the supporting segments (8) - in particular in a controlled manner.

7. Device according to the features of Claim 6, the supporting segments (8) extending radially outwards from the pivot axis with a lever arm (8) formed as a supporting surface (8).

8. Method for producing a bead reinforcing assembly (13) of a pneumatic vehicle tyre with at least one spirally wound bead reinforcing material (17),
in which firstly a carrier material (15) formed as a ring - in particular having a bead core - is placed concentrically in relation to the axis of rotation (2) of a rotatably mounted receiving device (3) on a supporting surface (8) formed in the receiving device for concentrically receiving the carrier material (15) formed as a ring,
in which then a reinforcing material (12) in strip or filament form is placed by the feed device (9) onto the carrier material (15) from the side of the placed carrier material (15) that is opposite from the supporting surface (8) in the direction of the axis of rotation (2), wherein, for placement, the receiving device (3) with the carrier material (15) is turned - in particular in a controlled manner - around the axis of rotation (2) of the receiving device (3) and at the same time the feed device (9) is changed - in particular in a controlled manner - in its position radially with respect to the axis of rotation (2), so that the reinforcing material (12) in strip or filament form is in this way built up spirally around the axis of rotation (2) on the carrier material (15), and in which in particular the bead reinforcing assembly (13) built up in this way from carrier material (15) and spirally built-up reinforcing material (17) in strip or filament form is then removed from the concentric supporting surface (8) of the receiving device (3) and provided for further tyre production.

9. Method for producing a bead reinforcing assembly (13) of a pneumatic vehicle tyre with at least one spirally wound bead reinforcing material (17) according to the features of Claim 8, in which, before feeding of the reinforcing material (17), the supporting surface (8) is adjusted in its supporting position for adaptation to the contour of the carrier material (15).

10. Method for producing a bead reinforcing assembly (13) of a pneumatic vehicle tyre with at least one spirally wound bead reinforcing material (17) according to the features of Claim 8, in which the supporting surface (8) is adjusted in its spooling position after placement of the carrier material (15) and in particular after fixing in the spooling position.

## Revendications

1. Dispositif de fabrication d'un ensemble (13) de renfort de bourrelet pour bandage pneumatique pour roue de véhicule à l'aide d'au moins un matériau (17) de renfort de bourrelet enroulé en spirale,
qui présente un dispositif de réception (3) monté à rotation autour d'un axe de rotation (2), qui reprend concentriquement un matériau de support (15) de forme annulaire présentant en particulier une âme de bourrelet, le dispositif de réception étant configuré avec une surface concentrique de soutien (8) qui soutient le matériau de support (15) dans la direction de l'extension de l'axe de rotation (2), un côté de la surface de soutien (8) étant ouvert dans la direction opposée à l'axe de rotation (2) pour permettre le montage et/ou l'enlèvement du matériau de support (15),
un dispositif d'entraînement (18) faisant tourner le dispositif de réception (3) en particulier de manière contrôlée,
un dispositif d'amenée (9), dont la position d'amenée par rapport à la surface de soutien (8) peut être modifiée dans la direction axiale par rapport à l'axe de rotation (2), permettant d'amener en continu et en particulier de manière contrôlée un renfort (12) en forme de ruban ou de fil pour monter le renfort de bourrelet (17) par le côté ouvert et
un dispositif d'entraînement (19) modifiant, en particulier de manière contrôlée, la position d'amenée du dispositif d'amenée (9) au moins à l'intérieur de la partie d'extension radiale du dispositif de réception (3) pendant l'approche en direction radiale vers l'axe de rotation (2) et/ou l'éloignement en direction radiale par rapport à l'axe de rotation,
la surface concentrique de soutien (8) qui soutient le matériau de support dans la première direction d'extension de l'axe de rotation (2) étant constituée de plusieurs segments de soutien (8) répartis dans la direction périphérique autour de l'axe de rotation (2), radialement à l'extérieur de la surface d'enveloppe radialement extérieure formée concentriquement par rapport à l'axe de rotation, configurés comme surface radiale de soutien (5) qui centre le matériau de support (15) et tous formés de manière à pouvoir pivoter autour d'un axe de pivotement orienté tangentiellement par rapport à la direction périphérique.

2. Dispositif selon les caractéristiques de la revendication 1, dans lequel le dispositif de réception (3) est configuré avec une surface d'enveloppe formée concentriquement par rapport à l'axe de rotation (2) et qui sert de surface radiale de soutien (5) pour le centrage du matériau de support (15).

3. Dispositif selon les caractéristiques de la revendication 2, dans lequel le dispositif de réception (3) est configuré avec une surface d'enveloppe radialement extérieure formée concentriquement par rapport à l'axe de rotation (2) et qui sert de surface radiale de soutien (5) pour le centrage du matériau de support (15).

4. Dispositif selon les caractéristiques de la revendication 3, dans lequel la surface d'enveloppe radialement extérieure configurée comme surface radiale de soutien (5) pour le centrage du matériau de support (15) est dotée d'une profilation qui permet d'obtenir une correspondance géométrique avec le matériau de support (15).

5. Dispositif selon les caractéristiques de la revendication 4, dans lequel la surface d'enveloppe radialement extérieure configurée comme surface radiale de soutien (5) pour le centrage du matériau de support (15) est formée dans la direction de l'axe de rotation (2) à une distance de la surface de soutien (8) qui correspond à l'extension du matériau de support (15) lorsqu'il est placé en position sur la surface d'enveloppe, avec un épaulement qui permet d'obtenir une correspondance géométrique avec le matériau de support (15).

6. Dispositif selon les caractéristiques de la revendication 1, doté de moyens de pivotement qui font pivoter les segments de soutien (8), en particulier de manière contrôlée.

7. Dispositif selon les caractéristiques de la revendication 6, dans lequel les segments de soutien (8) s'étendent radialement vers l'extérieur à partir de l'axe de pivotement, un bras de levier (8) étant configuré sous la forme d'une surface de soutien (8).

8. Procédé de fabrication d'un ensemble (13) de renfort de bourrelet d'un bandage pneumatique pour roue de véhicule, qui présente au moins un matériau (17) de renfort de bourrelet enroulé en spirale,
dans lequel un matériau de support (15) de forme annulaire et qui présente en particulier une âme de bourrelet est déposé concentriquement par rapport à l'axe de rotation (2) d'un dispositif de réception (3) monté à rotation sur une surface de soutien (8) formée dans le dispositif de réception pour recevoir concentriquement le matériau de support (15) de forme annulaire,
un matériau de renfort (12) en forme de ruban ou de fil étant ensuite placé par un dispositif d'amenée (9) sur le matériau de support (15) par le côté du matériau de support (15) déjà déposé opposé dans la direction qui va de l'axe de rotation (2) à la surface de soutien (8),
tandis que pour le placement, le dispositif de réception (3) est tourné, en particulier de manière contrôlée, avec le matériau de support (15) autour de l'axe de rotation (2) du dispositif de réception (3) et en même temps, la position du dispositif d'amenée (9) est modifiée radialement par rapport à l'axe de rotation (2), en particulier de manière contrôlée, de sorte que le matériau de renfort (12) en forme de ruban ou de fil est monté sur le matériau de support (15) en spirale autour de l'axe de rotation (2),
l'ensemble (13) de renfort de bourrelet constitué du matériau de support (15) et du matériau de renfort (17) en forme de ruban ou de fil monté en spirale étant ensuite en particulier enlevé de la surface concentrique de soutien (8) du dispositif de réception (3) pour être amené à la poursuite de la fabrication du bandage.

9. Procédé de fabrication d'un ensemble (13) de renfort de bourrelet d'un bandage pneumatique pour roue de véhicule, qui présente au moins un matériau (17) de renfort de bourrelet enroulé en spirale, selon les caractéristiques de la revendication 8, dans lequel la position de soutien de la surface de soutien (8) est ajustée avant l'amenée du matériau de renfort (17) pour l'adapter au contour du matériau de support (15).

10. Procédé de fabrication d'un ensemble (13) de renfort de bourrelet d'un bandage pneumatique pour roue de véhicule, qui présente au moins un matériau (17) de renfort de bourrelet enroulé en spirale, selon les caractéristiques de la revendication 8, dans lequel, après la pose du matériau de support (15), la surface de soutien (8) est amenée dans sa position d'enroulement, en particulier après sa fixation dans la position d'enroulement.
